# FASCICULE DE BREVET EUROPEEN

(11) **EP 0 419 368 B1**
(45) Date de publication et mention de la délivrance du brevet: **05.01.1994**
(21) Numéro de dépôt: 90402616.8
(22) Date de dépôt: 21.09.1990
(51) Int. Cl.: A47J 27/21

(54) **Bouilloire électrique à socle**
Elektrischer Warmwasserspeicher mit Sockel
Electrical boiler with a socket

(30) Priorité: 22.09.1989 FR 8912493
(43) Date de publication de la demande: 27.03.1991
(73) Titulaire: SEB S.A., F-21260 Selongey (FR)
(72) Inventeur: Bourgeois, Christian, F-39700 Dampierre (FR)
(74) Mandataire: Keib, Gérard

(56) Documents cités:
- DE-C- 488 811
- FR-A- 2 592 292
- GB-A- 2 185 150
- US-A- 1 994 877
- US-A- 4 528 429

## Description

La présente invention concerne une bouilloire comprenant un récipient à eau renfermant une résistance électrique de chauffage qui s'étend au-dessus du fond du récipient, et un socle sur lequel repose de façon amovible ledit récipient.

Dans les réalisations connues, le socle comporte des moyens de connexion électrique reliés au cordon d'alimentation électrique, pour raccorder celui-ci à la résistance chauffante, cette dernière étant reliée à un bloc de commande et de régulation thermique de la température de chauffage de la résistance.

Ce bloc de commande et de régulation thermique comporte un élément sensible à la température de la vapeur d'eau qui commande la coupure de l'alimentation électrique de la résistance, lorsque la température désirée est atteinte.

Ce bloc comporte des broches de connexion électrique susceptibles de venir en contact avec des moyens de connexion du socle reliés au cordon d'alimentation électrique destiné à être raccordé au réseau.

Les broches de connexion précitées font saillie soit sous le fond du récipient, soit sur le côté de celui-ci.

Dans les deux cas, il faut éviter de soulever le récipient du socle, avant de couper l'alimentation électrique, pour éviter tout risque de formation d'arcs entre les broches et les moyens de connexion électrique, susceptibles de détériorer ceux-ci.

On a décrit dans les brevets français 2 592 293 et 2 592 292 une bouilloire dont la poignée est équipée d'une gâchette formant levier dont l'extrémité inférieure porte des broches de connexion qui sont normalement en contact avec des lamelles de connexion logées dans une protubérance située sur un côté du socle. L'actionnement de cette gâchette permet de séparer les broches des lamelles. Cette gâchette coopère de plus avec un interrupteur du limiteur de température placé en haut de la bouilloire, pour couper l'alimentation électrique de la résistance chauffante avant la séparation des broches des lamelles précitées.

On évite ainsi tout risque de formation d'arc entre les broches et les lamelles de connexion ci-dessus, lorsque le récipient est soulevé du socle.

Toutefois, la construction de la bouilloire précitée est complexe et onéreuse.

Le document US 1 994 877 décrit un appareil ménager qui comprend un fer à repasser sec renfermant une résistance électrique et un socle sur lequel repose de façon amovible le fer, ce socle comportant des moyens de connexion électrique reliés au cordon d'alimentation électrique, pour raccorder celui-ci à la résistance chauffante, cette dernière étant reliée à un bloc de commande et de régulation thermique de la température de chauffage de la résistance, ce bloc comportant des broches de connexion électrique faisant saillie sur l'arrière du fer et s'étendant sensiblement parallèlement à sa semelle.

Le socle présente sur son côté adjacent au bloc de commande et de régulation, une protubérance comportant sur sa face en regard dudit bloc, des ouvertures permettant l'introduction à l'intérieur de cette protubérance, desdites broches en saillie du bloc, lorsque le fer est placé sur le socle, lesdites ouvertures de la protubérance, permettant l'engagement des broches du bloc de commande et de régulation étant des fentes verticales, chacune d'elles étant ouverte sur ladite face en regard du bloc et en partie sur le sommet de la protubérance de façon à permettre l'introduction des broches par ledit sommet, cette protubérance renfermant des lamelles de contact reliées au cordon d'alimentation, disposées en regard des ouvertures précitées et venant en contact avec lesdites broches lorsque le fer est posé sur le socle.

Néanmoins cette réalisation ne présente pas des garanties suffisantes de sécurité, les contacts entre les broches et les lamelles de contact étant facilement accessibles par l'utilisateur.

On connaît par le brevet US 4 528 429 un fer à repasser comprenant une résistance et un socle sur lequel le fer peut être posé verticalement, le socle possédant une protubérance renfermant des contacts électriques reliés à l'alimentation électrique et situés en regard des ouvertures par lesquelles peuvent s'engager des broches solidaires du fond du fer et reliées à la résistance.

Un volet de protection est placé horizontalement derrière les ouvertures et peut tourner ou coulisser horizontalement pour laisser passer les broches dans les ouvertures. Le fer possède une protubérance adaptée à déplacer le volet de protection lorsque le fer est posé sur le socle.

Ces réalisations sont également compliquées et nécessitent d'adapter une protubérance sur le fer pour déplacer le volet. De plus, le déplacement du volet est perpendiculaire au mouvement du fer sur le socle et le glissement du volet sur la protubérance du fer accélère l'usure de ceux-ci.

Le but de la présente invention est de remédier aux inconvénients ci-dessus en créant une bouilloire séparable de son socle d'alimentation électrique, de construction économique tout en présentant toutes les garanties de fiabilité et de sécurité.

L'invention vise ainsi une bouilloire comprenant un récipient à eau renfermant une résistance électrique de chauffage qui s'étend au-dessus du fond du récipient, et un socle sur lequel repose de façon amovible ledit récipient, ce socle comportant des moyens de connexion électrique reliés au cordon d'alimentation électrique, pour raccorder celui-ci à la résistance chauffante, cette dernière étant reliée à un bloc de commande et de régulation thermique de la température de chauffage de la résistance, ce bloc comportant des broches de connexion électrique faisant saillie sur le côté du récipient et s'étendant sensiblement parallèlement à son fond.

Suivant l'invention, cette bouilloire est caractérisée en ce que le socle présente sur son côté adjacent au bloc de commande et de régulation, une protubérance comportant sur sa face en regard dudit bloc, des ouvertures permettant l'introduction à l'intérieur de cette protubérance, desdites broches en saillie du bloc, lorsque le récipient est placé sur le socle, lesdites ouvertures de la protubérance, permettant l'engagement des broches du bloc de commande et de régulation étant des fentes verticales, chacune d'elles étant ouverte sur ladite face en regard du bloc et en partie sur le sommet de la protubérance de façon à permettre l'introduction des broches par ledit sommet, cette protubérance renfermant des lamelles de contact reliées au cordon d'alimentation, disposées en regard des ouvertures précitées et venant en contact avec lesdites broches lorsque le récipient est posé sur le socle le volet étant monté coulissant sensiblement verticalement derrière les ouvertures de la protubérance, contre l'action d'un ressort de rappel, l'une des broches du récipient pouvant prendre appui contre ledit volet, lorsque le récipient est placé sur le socle pour maintenir ledit volet en position basse dégagée desdites ouvertures, le ressort de rappel étant agencé pour pousser le volet en position haute pour obturer lesdites ouvertures, lorsque le récipient est soulevé du socle.

La construction et l'utilisation de cette bouilloire sont particulièrement simples.

La disposition du bloc de commande et de régulation sur l'un des côtés du récipient et duquel les broches font saillie parallèlement au fond du récipient, permet d'établir un contact direct entre ces broches et des lames contenues dans la protubérance. Il suffit que les ouvertures de la protubérance soient conçues de telle sorte que les broches puissent y pénétrer en posant naturellement (par déplacement vertical) le récipient sur le socle.

Par ailleurs, les fentes verticales permettent de guider l'introduction des broches dans la protubérance, lorsqu'on place verticalement le récipient sur le socle, pour amener ces broches en contact avec les lames.

Le volet supprime tout accès aux lames de la protubérance, lorsque le récipient n'est pas posé sur le socle, ce qui garantit aux utilisateurs une grande sécurité.

De plus, le déplacement du volet et de la bouilloire sont parallèles, ce qui rend plus facile l'ouverture du volet et limite les phénomènes d'usure. La bouilloire, selon l'invention ne nécessite pas la création de protubérance pour déplacer le volet, une des broches permettant l'ouverture du volet.

De préférence, le récipient comporte sur sa paroi latérale extérieure s'étendant au-delà du bloc de commande et de régulation, une nervure en saillie vers l'intérieur et pouvant s'engager dans une fente verticale ménagée sur la face de la protubérance opposée à sa face pourvue d'ouvertures, l'extrémité inférieure de cette nervure constituant ladite butée pouvant prendre appui sur la contre-butée du volet.

Cette nervure en saillie engagée dans une fente verticale du socle, permet d'obtenir un excellent centrage du récipient sur le socle.

D'autres particularités et avantages de l'invention apparaîtront encore dans la description ci-après.

Aux dessins annexés, donnés à titre d'exemples non limitatifs :
- la figure 1 est une vue en coupe verticale d'une première réalisation d'une bouilloire conforme à l'invention,
- la figure 2 est une coupe verticale du socle, sans le récipient,
- la figure 3 est une vue en coupe suivant III-III de la figure 2,
- la figure 4 est une vue en coupe suivant le plan IV-IV de la figure 3,
- la figure 5 est une vue en coupe de la partie inférieure d'une deuxième réalisation d'une bouilloire selon l'invention,
- la figure 6 est une vue en coupe de la partie inférieure d'une troisième réalisation d'une bouilloire selon l'invention,
- la figure 7 est une vue de la réalisation selon la figure 6, montrant le récipient séparé du socle.

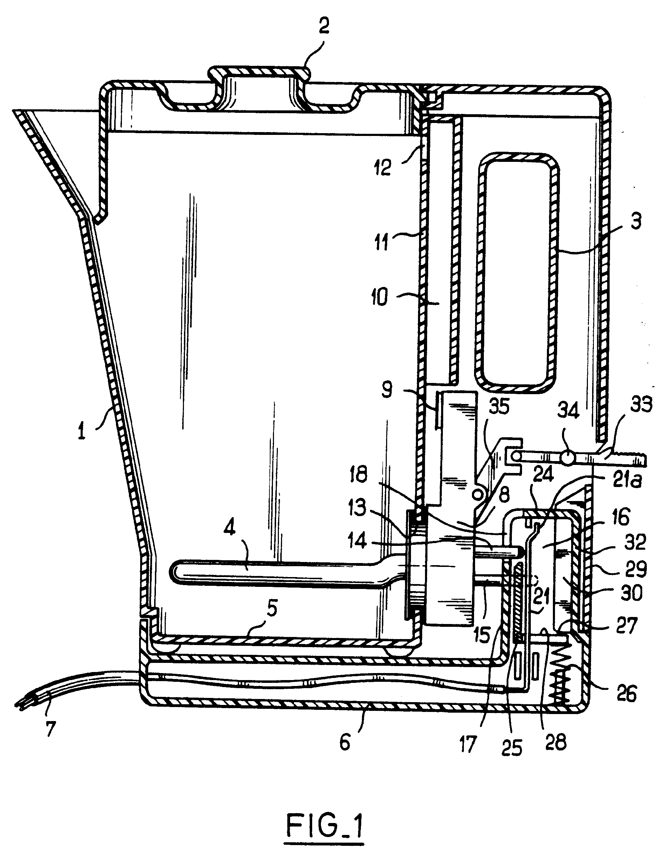

Dans la réalisation des figures 1 à 4, la bouilloire comprend un récipient à eau 1 fermé par un couvercle 2 et muni d'une poignée latérale 3. Ce récipient 1 renferme une résistance électrique de chauffage 4 qui s'étend au-dessus du fond 5 du récipient. La bouilloire comprend un socle 6 sur lequel repose de façon amovible le récipient 1. Ce socle 6 comporte des moyens de connexion électrique reliés au cordon d'alimentation électrique 7, pour raccorder celui-ci à la résistance chauffante 4 du récipient. Cette résistance 4 est reliée à un bloc 8 de commande et de régulation thermique de la température de chauffage de la résistance 4.

Ce bloc 8 comporte à sa partie supérieure un élément 9 sensible à la température de la vapeur qui débouche à son niveau par un conduit 10 s'étendant verticalement le long de la paroi 11 du récipient 1 et communiquant avec l'intérieur de celui-ci par une ouverture 12 située en haut sous le couvercle 2.

Lorsque l'élément sensible 9 détecte une vapeur ayant la température désirée, un thermostat logé dans le bloc 8 commande un interrupteur qui coupe l'alimentation électrique de la résistance 4. La structure interne du bloc 8 est en elle-même connue et ne sera par conséquent pas détaillée ici.

Ce bloc 8 est fixé de façon étanche dans une ouverture 13 de la paroi 11 du récipient, située près de son fond 5.

Ce bloc 8 comporte des broches de connexion électrique 14, 15 faisant saillie sur le côté du récipient 1 et s'étendant sensiblement parallèlement à son fond 5.

Le socle 6 présente sur son côté adjacent au bloc de commande et de régulation 8, une protubérance 16 comportant sur sa face 17 en regard du bloc 8, des ouvertures 18, 19, 20 (voir figures 1, 3 et 4), permettant l'introduction à l'intérieur de cette protubérance 16, desdites broches 14, 15 en saillie du bloc 8, lorsque le récipient est placé sur le socle. Cette protubérance 16 renferme des lamettes de contact 21, 22, 23 reliées au cordon d'alimentation 7, disposées verticalement en regard des ouvertures précitées et venant en contact avec les broches 14, 15 (la troisième n'est pas représentée) lorsque le récipient 1 est posé sur le socle 6.

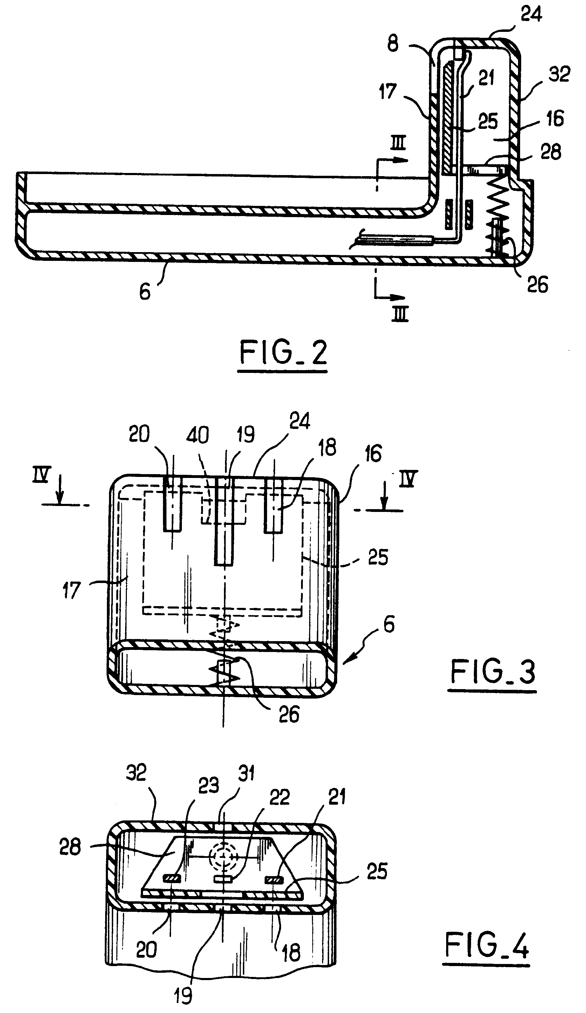

Comme indiqué sur la figure 3, les ouvertures 18, 19, 20 sont des fentes verticales. Chacune d'elles est ouverte sur la face 17 en regard du bloc 8 et en partie sur le sommet 24 de la protubérance 16, de façon à permettre l'introduction des broches 14, 15 par ce sommet.

On voit également sur les figures 1 à 4 qu'un volet 25 est monté coulissant sensiblement verticalement derrière les fentes 18, 19, 20 de la protubérance 16, contre l'action d'un ressort de rappel 26.

Le récipient 1 comporte une butée 27 pouvant prendre appui contre une contre-butée 28 du volet 25, lorsque le récipient est placé sur le socle 6 (comme indiqué sur la figure 1) pour maintenir le volet 25 en position basse dégagée des fentes 18, 19, 20.

Le ressort de rappel 26 est agencé pour pousser le volet 25 en position haute pour obturer les fentes 18, 19, 20, lorsque le récipient 1 est soulevé du socle 6, comme indiqué sur les figures 2 et 3.

On voit sur la figure 1 que le récipient 1 comporte sur sa paroi latérale extérieure 29 s'étendant au-delà du bloc 8 de commande et de régulation, une nervure verticale 30 en saillie vers l'intérieur et pouvant s'engager dans une fente verticale 31 (voir figure 4) ménagée sur la face 32 de la protubérance 16 opposée à sa face 17 pourvue de fentes 18, 19, 20.

L'extrémité inférieure 27 de cette nervure 30 constitue la butée définie plus haut, pouvant prendre appui sur la contre-butée 28 du volet 25. Cette contre-butée 28 est constituée par une paroi perpendiculaire au volet 25.

Par ailleurs, dans la réalisation représentée, la mise en position "marche" ou "arrêt" de la bouilloire est effectuée en actionnant un levier 33 articulé en 34, qui fait saillie à l'extérieur de la paroi latérale 29 du récipient. Ce levier 33 est relié de façon articulée à un bras pivotant 35 qui commande l'interrupteur de bloc de commande et de régulation 8.

Sur la figure 1, le levier 33 est en position "arrêt".

Dans la réalisation représentée sur la figure 1, les extrémités des broches 14 et les parties 21a des lames 21, 22, 23 destinées à venir en contact avec ces dernières sont revêtues d'une couche de métal bon conducteur de l'électricité et insensible à l'oxydation, tel que de l'argent. Il est ainsi possible de séparer les broches des lames lorsque l'appareil est sous tension.

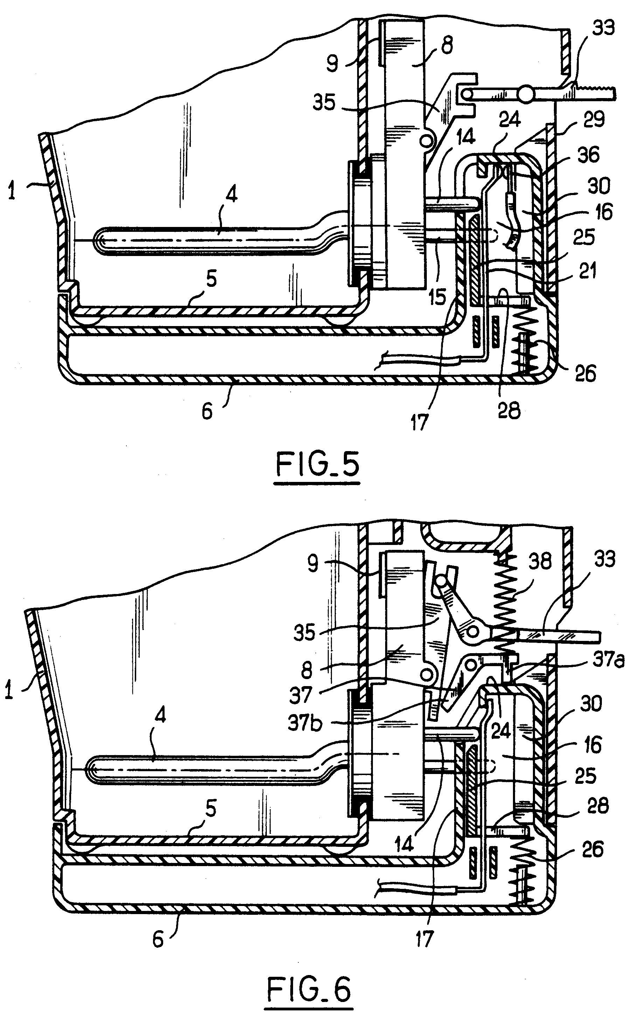

Dans la version représentée sur la figure 5, la protubérance 16 renferme en outre derrière les lames telles que 21 destinées à venir en contact avec les broches telles que 14 du bloc 8, des contacts électriques 36 sur lesquels prennent appui lesdites lames 21 sous l'action de la poussée exercée sur elles par les broches 14. Ces contacts 36 forment avec les lames 21 des interrupteurs fermant l'alimentation électriques et coupant celle-ci avant la séparation des broches 14 des lames 21 lorsque le récipient 1 est soulevé de son socle 6.

Dans la version représentée sur la figure 6, le récipient 1 comporte en outre des moyens mécaniques agissant directement sur le bras de commande 35 du bloc 8 de commande et de régulation pour couper l'alimentation électrique lorsque le récipient 1 est soulevé du socle 6 et avant séparation des broches 14 des lames 21.

Ces moyens mécaniques comprennent un levier articulé 37 dont une extrémité 37a prend appui contre l'action d'un ressort 38 sur le sommet 24 de la protubérance 16 lorsque le récipient 1 est placé sur le socle 6, comme indiqué sur la figure 6.

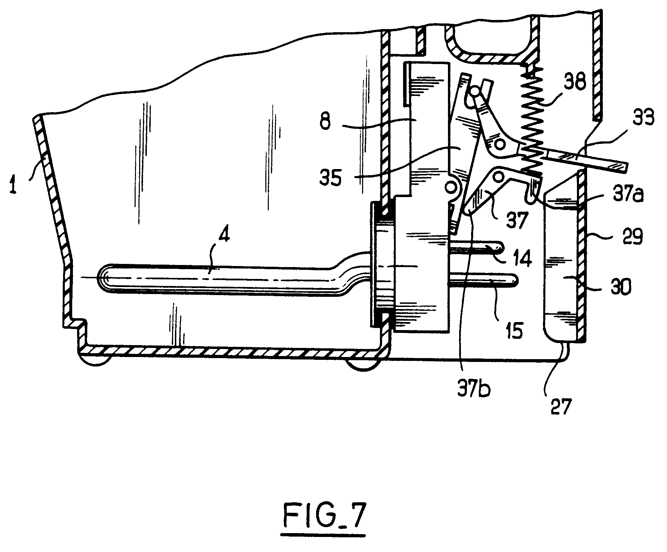

L'autre extrémité 37b du levier 37 coopère avec le bras pivotant 35 du bloc 8, de sorte que lorsque le récipient 1 est soulevé du socle 6, comme indiqué sur la figure 7, l'extrémité 37a du levier 37 n'est plus en appui sur le sommet 24 de la protubérance du socle, et il bascule sous l'effet du ressort 38 en mettant le bras 35 en position "arrêt", c'est à dire de coupure de l'alimentation électrique de la résistance 4.

Si dans cette position, on lève le levier 33, il revient automatiquement en position d'arrêt dès que l'on relâche la pression, garantissant ainsi que la bouilloire est toujours en position d'arrêt lors de sa mise en place sur le socle 6.

Les principaux avantages de la bouilloire que l'on vient de décrire sont les suivants :

Sa construction est simple et donc économique, notamment du fait que les broches du bloc de commande 8 sont directement mise en contact avec des moyens de connexion du socle 6.

La mise en place du récipient 1 sur le socle 6 et la connexion entre les broches et les lames du socle 6 sont très aisées. Il suffit d'amener le récipient 1 verticalement sur le socle 6 de façon à positionner les broches en regard des fentes verticales 18, 19, 20 correspondantes de la protubérance 16, lesquelles guident l'engagement des broches et leur mise en contact avec les lames 21, 22, 23.

Par ailleurs, le volet escamotable 25 qui est automatiquement enfoncé lors de la mise en place du récipient 1 sur le socle 6, interdit toute possibilité d'accès aux lames 21, 22, 23.

Lorsque le récipient 1 est en place sur le socle 6, la paroi extérieure 29 du récipient 1 qui porte la nervure 30 entoure complètement la protubérance 16, ce qui interdit toute possibilité d'accès aux broches 14, 15.

D'autre part, le ressort 26 agissant sur la base 28 du volet 25 sur laquelle prend appui l'extrémité 27 de la nervure 30, aide le soulèvement du récipient 1 du socle 6.

Dans le cas des réalisations selon les figures 5 et 6, tout risque de formation d'arcs entre les broches électriques et les lames est évité.

De plus, dans le cas de la bouilloire selon la figure 6, on ne risque pas de mettre le récipient 1 en position sur le socle 6 alors que le bloc de commande 8 est en position "marche".

Bien entendu, l'invention n'est pas limitée aux exemples de réalisation que l'on vient de décrire et on peut apporter à ceux-ci de nombreuses modifications sans sortir du cadre de l'invention.

Ainsi, la descente du volet 25 masquant les fentes 18, 19, 20 de la protubérance peut également être commandée par l'une des broches par exemple par la broche de terre 15 qui est plus longue que les deux autres. A cet effet, le bord supérieur du volet 25 peut comporter en regard de la fente 19 une encoche 40 (voir figure 3) dans laquelle peut s'engager l'extrémité de la broche 15, de sorte que celle-ci pousse le volet 25 vers le bas lorsque le récipient 1 est placé sur le socle 6.

## Revendications

1. Bouilloire comprenant un récipient à eau (1) renfermant une résistance électrique de chauffage (4) qui s'étend au-dessus du fond (5) du récipient, et un socle (6) sur lequel repose de façon amovible ledit récipient, ce socle (6) comportant des moyens de connexion électrique reliés au cordon d'alimentation électrique (7), pour raccorder celui-ci à la résistance chauffante (4), cette dernière étant reliée à un bloc (8) de commande et de régulation thermique de la température de chauffage de la résistance, ce bloc (8) comportant des broches (14, 15) de connexion électrique faisant saillie sur le côté du récipient (1) et s'étendant sensiblement parallèlement à son fond (5) caractérisé en ce que le socle (6) présente sur son côté adjacent au bloc (8) de commande et de régulation, une protubérance (16) comportant sur sa face (17) en regard dudit bloc, des ouvertures (18, 19, 20) permettant l'introduction à l'intérieure de cette protubérance, desdites broches (14, 15) en saillie du bloc (8), lorsque le récipient (1) est placé sur le socle (6), lesdites ouvertures étant des fentes verticales (18, 19, 20), chacune d'elles étant ouverte sur ladite face (17) en regard du bloc (8) et en partie sur le sommet (24) de la protubérance (16) de façon à permettre l'introduction des broches (14, 15) par ledit sommet (24), cette protubérance (16) renfermant des lamelles de contact (21, 22, 23) reliées au cordon d'alimentation, disposées en regard des ouvertures précitées (18, 19, 20) et venant en contact avec lesdites broches lorsque le récipient (1) est posé sur le socle (6), un volet (25) étant monté coulissant sensiblement verticalement derrière les ouvertures (18, 19, 20) de la protubérance (16), contre l'action d'un ressort de rappel (26), l'une (15) desdites broches du récipient pouvant prendre appui contre ledit volet, lorsque le récipient (1) est placé sur le socle (6) pour maintenir ledit volet (25) en position basse dégagée desdites ouvertures (18, 19, 20), le ressort de rappel (26) étant agencé pour pousser le volet (25) en position haute pour obturer lesdites ouvertures (18, 19, 20), lorsque le récipient (1) est soulevé du socle.

2. Bouilloire conforme à la revendication 1, caractérisée en ce que le récipient (1) comporte sur sa paroi latérale extérieure (29) s'étendant au-delà du bloc (8) de commande et de régulation, une nervure (30) en saillie vers l'intérieur et pouvant s'engager dans une fente verticale (31) ménagée sur la face (32) de la protubérance opposée à sa face (17) pourvue d'ouvertures (18, 19, 20), l'extrémité inférieure de cette nervure (30) constituant ladite butée (27) pouvant prendre appui sur la contre-butée (28) du volet (25).

3. Bouilloire conforme à l'une des revendications 1 à 2 caractérisée en ce que le récipient (1) comporte un levier (33) d'actionnement du bloc (8) de commande et de régulation, qui fait saillie à l'extérieur de la paroi latérale du récipient (1).

4. Bouilloire conforme à l'une des revendications 1 à 3 caractérisée en ce que les extrémités des broches (14) et les parties (21a) des lames (21) destinées à venir en contact avec ces dernières sont revêtues d'une couche de métal bon conducteur de l'électricité et insensible à l'oxydation.

5. Bouilloire conforme à l'une des revendications 1 à 4 caractérisée en ce que la protubérance (16) renferme en outre derrière les lames (21, 22, 23) destinées à venir en contact avec les broches (14, 15) du bloc (8), des contacts électriques (36) sur lesquels prennent appui lesdites lames sous l'action de la poussée exercée sur elles par les broches (14, 15), ces contacts (36) formant avec lesdites lames des interrupteurs fermant l'alimentation électrique et coupant celle-ci avant la séparation des broches (14, 15) et des lames (21, 22, 23) lorsque le récipient (1) est soulevé de son socle (6).

6. Bouilloire conforme à l'une des revendications 1 à 3 caractérisée en ce que le récipient (1) comporte en outre des moyens mécaniques agissant directement sur le bras de commande (35) dudit bloc (8) de commande et de régulation pour couper l'alimentation électrique lorsque le récipient (1) est soulevé du socle (6) et avant séparation desdites broches (14, 15) et lames (21, 22, 23).

7. Bouilloire conforme à la revendication 6, caractérisée en ce que lesdits moyens mécaniques comprennent un levier (17) articulé dont une extrémité prend appui contre l'action d'un ressort (38) sur le sommet de la protubérance lorsque le récipient (1) est placé sur le socle (6) et l'autre extrémité sur le bras (35) de commande du bloc (8) pour mettre celui-ci en position d'arrêt lorsque le récipient (1) est soulevé de son socle (6).

## Patentansprüche

1. Wasserkessel mit einem Wasserbehälter (1), der einen elektrischen Heizwiderstand (4) enthält, der sich oberhalb des Bodens (5) des Behälters erstreckt, und einem Sockel (6), auf dem der Behälter auf abnehmbare Weise aufliegt, wobei dieser Sockel (6) elektrische Verbindungsmittel umfaßt, die mit der elektrischen Netzschnur (7) verbunden sind, um diese mit dem Heizwiderstand (4) zu verbinden, wobei dieser letztere mit einem Steuerungs- und Wärmeregelungs-Block (8) für die Heiztemperatur des Widerstandes verbunden ist, wobei dieser Block (8) elektrische Verbindungsstifte (14, 15) aufweist, die von der Seite des Behälters (1) abstehen und sich im wesentlichen parallel zu seinem Boden (5) erstrecken, dadurch gekennzeichnet, daß der Sockel (6) an seiner an den Steuerungs- und Regelungs-Block (8) angrenzenden Seite eine Ausbauchung (16) aufweist, die an ihrer dem Block zugewandten Seite (17) Öffnungen (18, 19, 20) aufweist, die die Einführung der vom Block (8) abstehenden Stifte (14, 15) in das Innere dieser Ausbauchung erlauben, wenn der Behälter (1) auf den Sockel (6) gesetzt wird, wobei die Öffnungen vertikale Schlitze (18, 19, 20) sind, von denen jeder zu der dem Block (8) zugewandten Seite (17) und zum Teil zum Scheitel (24) der Ausbauchung (16) geöffnet ist, derart, daß die Stifte (14, 15) durch den Scheitel (24) eingeführt werden können, wobei diese Ausbauchung (16) Kontaktlamellen (21, 22, 23) umschließt, die mit der Netzschnur verbunden sind, gegenüber den genannten Öffnungen (18, 19, 20) angeordnet sind und mit den Stiften in Kontakt gelangen, wenn der Behälter (1) auf den Sockel (6) gesetzt wird, wobei hinter den Öffnungen (18, 19, 20) der Ausbauchung (16) eine Klappe (25) angebracht ist, die im wesentlichen senkrecht gegen die Wirkung einer Rückstellfeder (26) gleiten kann, wobei einer (15) der Stifte des Behälters sich an der Klappe abstützen kann, wenn der Behälter (1) auf den Sockel (6) gesetzt ist, um die Klappe (25) in einer unteren, die Öffnungen (18, 19, 20) freigebenden Position zu halten, und wobei die Rückstellfeder (26) so ausgebildet ist, daß sie die Klappe (25) in eine obere Position drückt, um die Öffnungen (18, 19, 20) zu verschließen, wenn der Behälter (1) vom Sockel abgehoben ist.

2. Wasserkessel gemäß Anspruch 1, dadurch gekennzeichnet, daß der Behälter (1) an seiner äußeren Seitenwand (29) eine sich jenseits des Steuerungs- und Regelungs-Blocks (8) erstreckende, nach innen hervorstehende Rippe (30) enthält, die in einen vertikalen Schlitz (31) eingreifen kann, der in der Seite (32) der Ausbauchung ausgebildet ist, die zur mit den Öffnungen (18, 19, 20) versehenen Seite entgegengesetzt ist, wobei das tiefere Ende der Rippe (30) den Anschlag (27) bildet, der sich am Gegenanschlag (28) der Klappe (25) abstützen kann.

3. Wasserkessel gemäß einem der Ansprüche 1 bis 2, dadurch gekennzeichnet, daß der Behälter (1) einen aus der Seitenwand des Behälters (1) nach außen hervorstehenden Betätigungshebel (33) für den Steuerungs- und Regelungs-Block (8) enthält.

4. Wasserkessel gemäß einem der Ansprüche 1 bis 3, dadurch gekennzeichnet, daß die Enden der Stifte (14) und die Abschnitte (21a) der Lamellen (21), die dazu vorgesehen sind, in Kontakt mit den Stiften zu gelangen, mit einer elektrisch gut leitenden und korrosionsfesten Metallschicht überzogen sind.

5. Wasserkessel gemäß einem der Ansprüche 1 bis 4, dadurch gekennzeichnet, daß die Ausbauchung (16) außerdem hinter den Lamellen (21, 22, 23), die dazu vorgesehen sind, mit den Stiften (14, 15) des Blocks (8) in Berührung zu gelangen, elektrische Kontakte (36) umschließt, an denen sich die Lamellen unter der Wirkung des auf sie durch die Stifte (14, 15) ausgeübten Drucks abstützen, wobei die Kontakte (36) mit den Lamellen Unterbrechungsschalter bilden, die den elektrischen Versorgungskreis schließen und diesen vor der Trennung der Stifte (14, 15) von den Lamellen (21, 22, 23) unterbrechen, wenn der Behälter (1) von seinem Sockel (6) abgehoben wird.

6. Wasserkessel gemäß einem der Ansprüche 1 bis 3, dadurch gekennzeichnet, daß der Behälter (1) außerdem mechanische Mittel enthält, die direkt auf den Steuerungsarm (35) des Steuerungs- und Regelungs-Blocks (8) wirken, um die elektrische Versorgung zu unterbrechen, bevor die Stifte (14, 15) von den Lamellen (21, 22, 23) getrennt werden, wenn der Behälter (1) von seinem Sockel (6) abgehoben wird

7. Wasserkessel gemäß Anspruch 6, dadurch gekennzeichnet, daß die mechanischen Mittel einen gelenkigen Hebel (17) enthalten, von dem ein Ende sich gegen die Wirkung einer Feder (38) am Scheitel der Ausbauchung abstützt, wenn der Behälter (1) auf den Sockel (6) gesetzt ist, und dessen anderes Ende sich am Steuerungsarm (35) des Blocks (8) abstützt, um diesen in die Sperrstellung zu bringen, wenn der Behälter (1) von seinem Sockel (6) abgehoben wird.

## Claims

1. A kettle comprising a water container (1) containing an electrical heating resistance (4) which extends above the bottom (5) of the container, and a base (6) on which said container detachably rests, said base (6) comprising electrical connecting means connected to the electric supply cord (7) for connecting the same to the heating resistance (4), the latter being connected to a block (8) for control and thermal regulation of the resistance heating temperature, said block (8) having electrical connection pins (14, 15) projecting from the side of the container (1) and extending substantially parallel to its bottom (5), characterised in that the base (6) has, on its side adjacent the control and regulation block (8), a protuberance (16) which, on its surface (17) facing said block, is formed with apertures (18, 19, 20̸) for the introduction of the said pins (14, 15) projecting from the block (8) into the interior of said protuberance when the container (1) is placed on the base (6), said apertures being vertical slots (18, 19, 20̸), each being open on said surface (17) facing the block (8) and partly on the top (24) of the protuberance (16) so as to allow introduction of the pins (14, 15) via said top (24), said protuberance (16) containing contact blades (21, 22, 23) connected to the supply cord and disposed opposite the said apertures (18, 19, 20̸) and coming into contact with the said pins when the container (1) is placed on the base (6), a flap (25) being mounted to slide substantially vertically behind the apertures (18, 19, 20̸) of the protuberance (16) against the action of a return spring (26), one (15) of the said pins of the container being adapted to bear against the said flap when the container (1) is placed on the base (6) in order to hold said flap (25) in the bottom position disengaged from said apertures (18, 19, 20̸), the return spring (26) being adapted to push the flap (25) into the top position to close said apertures (18, 19, 20̸) when the container (1) is lifted from the base.

2. A kettle according to claim 1, characterised in that the outer side wall (29) of the container (1) extending beyond the control and regulation block (8) has a rib (30̸) projecting inwardly and adapted to engage in a vertical slot (31) formed on the surface (32) of the protubeterance remote from its surface (17) formed with apertures (18, 19, 20̸), the bottom end of said rib (30̸) which forms the said stop (27) being adapted to bear on the co-acting stop (28) of the flap (25).

3. A kettle according to claim 1 or 2, characterised in that the container (1) comprises a lever (33) for actuating the control and regulating block (8), such lever projecting outside the side wall of the container (1).

4. A kettle according to any one of claims 1 to 3, characterised in that the ends of the pins (14) and the parts (21a) of the blades (21) adapted to come into contact with the latter are coated with a layer of a metal which is a good electrical conductor and insensitive to oxidation.

5. A kettle according to any one of claims 1 to 4, characterised in that the protuberance (16) also contains behind the blades (21, 22, 23) adapted to come into contact with the pins (14, 15) of the block (8), electrical contacts (36) against which said blades bear by the action of the thrust exerted on them by the pins (14, 15), said contacts (36) forming together with said blades switches which close the electrical supply circuit and break the same before separation of the pins (14, 15) and of the blades (21, 22, 23) when the container (1) is lifted from its base (6).

6. A kettle according to any one of claims 1 to 3, characterised in that the container (1) also comprises mechanical means acting directly on the control arm (35) of said control and regulation block (8) to cut the electrical supply when the container (1) is lifted from the base (6) and before separation of said pins (14, 15) and blades (21, 22, 23).

7. A kettle according to claim 8, characterised in that the said mechanical means comprise an articulated lever (17), one end of which bears against the action of a spring (38) on the top of the protuberance when the container (1) is placed on the base (6) and the other end on the arm (35) controlling the block (8) to bring the latter into the stop position when the container (1) is lifted from its base (6).
